# EUROPEAN PATENT APPLICATION

(11) **EP 2 279 667 A1**
(43) Date of publication of application: **02.02.2011**
(21) Application number: 09382129.6
(22) Date of filing: 30.07.2009
(51) Int. Cl.: A23D 9/04, C11C 3/08, A61K 31/202

(54) **Vegetable and marine oil or fat compositions enriched with DHA or EPA and C18 or higher fatty acid**

(71) Applicant: Brudy Technology, S.L., 08006 Barcelona (ES)
(72) Inventor: Gassó Casademunt, Francisco, 08173 Sant Cugat del Valles (ES)
(74) Representative: Ponti Sales, Adelaida

(57) **Abstract**

The present invention relates to a vegetable oil or fat composition comprising di- or triglycerides, **characterised in that** said di- or triglycerides comprise each, independently, at least one acyl radical of a C18 or higher fatty acid, preferably selected from oleic acid, linoleic acid and arachidonic acid, and at least one acyl radical of a fatty acid selected from docosahexaenoic (DHA) and eicosapentaenoic acid (EPA). The present invention further relates to a marine oil or fat composition comprising di- or triglycerides, said di- or triglycerides comprising each, independently, at least one acyl radical of a C18 or higher fatty acid, preferably selected from oleic acid, linoleic acid and arachidonic acid, and at least one acyl radical of a fatty acid selected from DHA and EPA, **characterised in that** the molar percentage (mol%) of the C18 or higher fatty acid, preferably oleic acid, linoleic acid or arachidonic acid, is equal or higher than the mol% of the EPA or DHA in said marine oil composition.

## Description

### Field of the invention

The invention is in the field of organic chemistry and bromatology, in particular in oils and fat products and nutraceuticals.

### Background of the invention

Docosahexaenoic (DHA) and eicosapentaenoic acid (EPA), a.k.a. omega 3 fatty acids, are polyunsaturated fatty acids (PUFA) that have in common a final carbon-carbon double bond in the ω-3 position; that is, the third bond from the methyl end of the fatty acid.

DHA and EPA are known as essential to normal growth and health and in the past few years their consumption has increased due to their favorable health properties, including among other antioxidant, antiinflammatory properties, and reduction of the risk of coronary heart disease. DHA and EPA are usually presented as mono-, di- or triglycerides, i.e. esters of glycerol with one, two, or three fatty acids, respectively.

DHA and EPA are mainly produced by extraction from marine oils, i.e. from fish or algae oils. These fatty acids contain 5 or 6 double bonds, which render them prone to atmospheric oxidation. It is believed that the peroxides produced in this oxidation break down to secondary oxidation products, which exhibit undesirable properties, such as a pronounced taste and smell of fish. Worse, they present regurgitation problems, i.e. the return of undigested food back up the esophagus to the mouth, or the return of gases with a fishy odor to the mouth, a clear burden to pregnant women taking combinations of folic acid with DHA, or to the pediatric population which is highly sensitive to flavor. DHA-enriched foods suffer an extremely high susceptibility of DHA to oxidative rancidity, which in turn severely reduces the flavor quality and shelf-life of such products. (J Am Oil Chem Soc (2008) 85:543-548).

Due to the above mentioned problems, the amount of DHA and EPA that can be included in food, foodstuffs, and pharmaceutical formulations is seriously constrained. The oxidation, rancidity, smell, and flavor problems do not allow the preparation of food, foodstuffs, of formulations with significant high doses of DHA or EPA.

So far, attempts to decrease the unwanted properties of DHA and EPA have been mostly reduced to mixing marine oils with vegetable oils. However, these blends are limited by the low effective quantities of DHA, EPA in the mixture, and the impossibility to increase the DHA or EPA load in said resulting mixtures.

W02004096119 (Eger, Shaul and Neeman, Isaac) discloses in Example 1 an olive oil/omega-3 preparation with an olive oil base containing 20% fish oil which includes 30% EPA+DHA plus a palm oil derived monoglyceride.

US20060093688 (Eger, Shaul and Neeman, Isaac) relates to a nutritional, olive-oil based, at least semi-solid product for oral intake and for topical application, the product including: (a) an olive oil; (b) an omega-3 fatty acid source, and (c) an emulsifier, the components being intimately mixed so as to form the at least semi-solid product, and wherein a total water content within the product is within a range of 0.25% to 3%, by weight.

US20070166411 (Squibb Bristol Myers Co) relates to a nutritional supplement for administration to children. The supplement comprises a protein component, a carbohydrate component, and a fat or lipid component which further comprises a source of DHA. In Example 3 of the patent specification, the lipid source comprises a blend of the following based on w/w of the total lipid content: 29.3% canola oil, 20.7% soy oil, 20.5% high oleic sunflower oil, 19.8% medium chain triglyceride oil, 8.8% corn oil, and 0.9% DHA oil.

Maduko et al. (J Am Oil Chem Soc (2008) 85:197-204) disclose the enzymatic interesterification of tripalmitin with vegetable oil blends and fish oil. The structured lipids produced has in the closest case, and amount of 1.2 and 0.2 mol% of EPA and DHA, respectively, in an structured lipid synthesized from a blend of coconut, safflower, soybean and fish oils (see Table 1 in Maduko et al).

Other efforts to decrease the unwanted properties of DHA and EPA have been directed to the stabilization of marine oil by the addition of α-tocopherol or mixed tocopherols at a level of 0.1%, but this has resulted only in a short term improvement in stability, i.e. a few days. Stabilization with tetrabutylhydroquinone has also been proposed, but this is of very restricted application having regard to the extremely bitter taste of this compound. In this line, EP0612346 (F. Hoffmann-La Roche AG) proposes a process for stabilizing marine oil by treating the oil with silica and incorporating a lecithin, ascorbyl palmitate and a tocopherol in the thus-treated oil.

W004085582 (Suntory Ltd.) discloses a lipid-improving agent and beverage or food having a lipid-improving action, specifically, lowering neutral fat (triglycerides) or cholesterol in blood, increasing DL-cholesterol in blood, buming stored fat and edible fat, enhancing expression of hepatic APART (transcription factor of an intranuclear receptor type) and related genes, and suppressing expression of PPARy of fat tissues and related gene. The lipid-improving agent containing an active ingredient, at least one member selected from a triglyceride(s) where polyunsaturated fatty acid of omega-6 type, omega-3 type or omega-9 type is bonded to 2-position of the triglyceride(s) and a triglyceride(s) where polyunsaturated fatty acid of omega-6 type, omega-3 type or omega-9 type is bonded to 2-position and saturated and/or mono-unsaturated fatty acid having not less than 8 carbons are/is bonded to 1,3-positions of the triglyceride(s), and to provide a method for producing the same. They indicate that it has been known that octanoic acid (caprylic acid) 8:0 and 9-octadecaenoic acid (oleic acid) 18:1ω9 enhance the expression of the PPAR genes, and a triglyceride whereby such fatty acids are bonded to 1,3-positions can be an effective lipid-improving agent.

Contrary to expectations, Yankah et al. (Journal of Food Lipids (2000) 7:247-261) show that structured lipids synthesized from DHA single cell oil -an algal source of PUFA-, modified with caprylic, oleic, or stearic acids as acyl donors, are less stable to oxidation, than the natural corresponding sources. They, therefore, combat oxidation and the disadvantages associated therewith by adding adequate antioxidants to structured lipid formulations.

Rao et al. (Journal of the American Oil Chemists' Society, 79(9), 2002, pp 885-890) describe an enzymatic acidolysis in hexane to produce n-3 or n-6 FA-enriched structured lipids from coconut oil.

Sahin et al. (J. Agric. Food Chem. 2006, 54, 3717-3722) disclose the preparation of human milk substitutes containing omega-3 fatty acids. Hazelnut oil fatty acids and omega-3 fatty acids are used to prepare structured lipids derived from tripalmitin (glycerol tripalmitate).

### Summary of the invention

The present invention relates to a vegetable oil or fat composition comprising di- or triglycerides, **characterised in that** said di- or triglycerides comprise each, independently,
- at least one acyl radical of a C18 or higher fatty acid, preferably selected from oleic acid, linoleic acid and arachidonic acid, and
- at least one acyl radical of a fatty acid selected from docosahexaenoic (DHA) and eicosapentaenoic acid (EPA).

The present invention further relates to a marine oil or fat composition comprising di- or triglycerides, said di- or triglycerides comprising each, independently,
- at least one acyl radical of a C18 or higher fatty acid, preferably selected from oleic acid, linoleic acid and arachidonic acid, and
- at least one acyl radical of a fatty acid selected from DHA and EPA,
**characterised in that** the molar percentage (mol%) of the C18 or higher fatty acid, preferably oleic acid, linoleic acid or arachidonic acid, is equal or higher than the mol% of the EPA or DHA in said marine oil composition.

Said vegetable or marine oil or fat compositions may be used as food, foodstuffs, as a medicament, in pharmaceutical formulations, in cosmetic applications. They have antioxidant properties and are also useful in the prevention or treatment of lipodystrophy, a male and/or female infertility, a tumoral disease, or a disease or pathological condition associated with cellular oxidative damage

The present invention further relates to processes for the preparation of the vegetable or marine oil or fat compositions.

### Description of the drawings

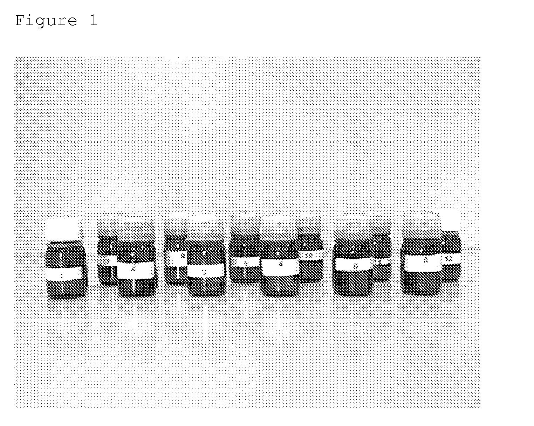

Figure 1. Prepared vegetable oil composition samples for the tasting test.

### Description of the invention

In one embodiment, the present invention relates to a vegetable oil or fat composition comprising di- or triglycerides, **characterised in that** said di- or triglycerides comprise each, independently,
- at least one acyl radical of a C18 or higher fatty acid, preferably selected from oleic acid, linoleic acid and arachidonic acid, and
- at least one acyl radical of a fatty acid selected from docosahexaenoic (DHA) and eicosapentaenoic acid (EPA).

These vegetable oil or fat compositions present improved organoleptic properties such as an agreeable taste and the absence or minimization of fish smell; have no or minimal regurgitation problems. Importantly, such compositions allow an increased loading of the effective amount of EPA and DHA, and an extended shelf-life of the compositions carrying them.

The present invention allows the preparation of oils and fats with an extended shelf-life. Vegetable oils and fats known to become easily rancid, may have an extended shelf life by the addition of EPA or DHA esterified to any one of the oxygen atoms of the glycerol in the di- or triglycerides of said vegetable oils and fats.

The term "C18 or higher fatty acid" means a saturated or unsaturated fatty acid with at least 18 carbon atoms in its backbone, except for DHA and EPA. Therefore, when using the term "C18 or higher fatty acid" in the present invention it will be understood that EPA and DHA are not included. Nevertheless, in the claims this exception is specifically mentioned. Examples of such "C18 or higher fatty acid" are ahown, without being limited to, in the following Table 1, with oleic acid, linoleic acid and arachidonic acid being the most preferred.

**Table 1**

| | |
|---|---|
| C18:0 | Stearic acid |
| C18:1n12 | 6-Octadecenoic / Petroselinic acid |
| C18:1n12t | *trans*-6-octadecenoic / petroselaidic acid |
| C18:1n9c | Oleic acid |
| C18:1n9t | Elaidic acid |
| C18:1 n7 | Vaccenic acid |
| C18:1n7t | trans-vaccenic acid |
| C18:2n6c | Linoleic acid |
| C18:2n6t | Linolelaidic acid |
| C18:3n6 | γ-linolenic acid |
| C18:3n3 | α-Linolenic acid |
| C18:4n3 | Stearidonic acid |
| | |
| C20:0 | Eicosanoic / Arachidic acid |
| C20:1n15 | *cis*-5-Eicosenoic acid |
| C20:1n12 | *cis*-8-Eicosenoic acid |
| C20:1 n9 | *cis*-11-Eicosenoic / Gondolic acid |
| C20:1 n9t | *trans*-11-Eicosenoic acid |
| C20:2n6 | *cis*-11,14-Eicosadienoic acid |
| C20:3n6 | *cis*-8,11,14-Eicosatrienoic / homogamma linolenic acid |
| C20:3n3 | *cis*-11,14,17-Eicosatrienoic acid |
| C20:4n6 | Arachidonic acid |
| | |
| C22:0 | Docosanoic / Behenic acid |
| C22:1 n9 | *cis*-13-Docosenoic / Erucic acid |
| C22:1 n9t | *trans*-13-Docosenoic /Brassidic acid |
| C22:2n6 | *cis*-13,16-Docosadienoic acid |
| C22:3n3 | *cis*-13,16,19-Docosatrienoic acid |
| C22:4n6 | *cis*-7,10,13,16-Docosatetraenoic acid |
| C22:5n3 | *cis*-7-10-13-16-19-Docosapentaenoic acid (DPA) |
| C22:5n6 | *cis*-4-7-10-13-16-Docosapentaenoic acid |
| C22:5n6 | *cis*-4-7-10-13-16-Docosapentaenoic acid |
| | |
| C24:0 | Tetracosanoic / lignoceric acid |
| C24:1 n9 | *cis*-15-tetracosenoic / Nervonic acid |

The term "vegetable oil or fat" means oil or fat obtained from a terrestrial plant source, including oils and fats that have been fractionated, including oils from plants genetically modified, and blends of oils or fats from plant sources. Although both terms, i.e. oil and fat, are used interchangeably in the art, those vegetable fats that are liquid at ambient temperatures are more precisely referred to as vegetable oils. Both oils and fats are comprised in the scope of the present invention.

The vegetable oils and fats may be edible or non edible. Non edible vegetable oils and fats may be used for instance in cosmetic or topical applications. In one embodiment of the present invention, the vegetable oils and fats are edible. In another embodiment of the present invention, the vegetable oils and fats are used as excipients in pharmaceutical formulations, or in cosmetics, soaps, candles, and the like.

Examples of vegetable fats include among other cocoa butter, shea butter, Illipe butter, Mowrah butter, Nutmeg butter, and the like.

Example of vegetable oils include, without being limited to, acai oil, algae oil (by-product of a smokestack emission reduction system), almond oil, amaranth oil, Amur cork tree fruit oil, apple seed oil, apricot oil, argan oil, artichoke oil, avocado oil, babassu oil, Balanos oil, ben oil, blackcurrant seed oil, Bladderpod oil, borage seed oil, Borneo tallow nut oil, bottle gourd oil, Brucea javanica oil, Buffalo gourd oil, Burdock oil (Bur oil), candlenut oil (Kukui nut oil), canola oil, Cape chestnut oil (yangu oil), Carob pod oil (algaroba oil), carrot seed oil, cashew oil, castor oil, Chaulmoogra oil, cocklebur oil, coconut oil, cohune oil, colza oil, Copaiba, coriander seed oil, corn oil, cotton seed oil, Crambe oil, Cuphea oil, Dammar oil, Dika oil, evening primrose oil, false flax oil, flax seed oil, grape seed oil, ground nut oil, hazelnut oil, hemp oil, high oleic rapeseed oil, high oleic sunflower oil, Honge oil, Jatropha oil, Jojoba oil, Kapok seed oil, Lallemantia oil, lemon oil, linseed oil, macadamia oil, mango oil, Marula oil, meadowfoam seed oil, milk bush, Mongongo nut oil (manketti oil), mustard oil, Neem oil, Nutmeg oil, Ojon oil, okra seed oil (hibiscus seed oil), olive oil, orange oil, palm oil (palm kernel oil), papaya seed oil, peanut oil, pecan oil, pequi oil, perilla seed oil, Petroleum nut oil, pine nut oil, pistachio oil, poppyseed oil, prune kernel oil, pumpkin seed oil, quinoa oil, radish oil, ramtil oil, rapeseed (canola) oil, rice bran oil, rose hip seed oil, royle oil, Sacha Inchi oil, safflower oil, salicornia oil, sea buckthorn oil, sesame oil, sheanut oil, snowball seed oil (Viburnum oil), soybean oil, Stillingia oil, sunflower seed oil, Tall oil, Tamanu oil, tea seed oil (Camellia oil), thistle oil, tomato seed oil, Tonka bean oil (Cumaru oil), tung oil, Vernonia oil, walnut oil, watermelon seed oil, wheat germ oil, and any mixture or blend thereof.

In one embodiment, the vegetable oil is selected from olive oil, sunflower seed, soybean oil, and any mixture or blend thereof.

In one embodiment, in the vegetable oil or fat composition of the present invention, the DHA or EPA is located in position *sn*-2 of the di- or triglyceride.

In one embodiment, the present invention relates to a marine oil or fat composition comprising di- or triglycerides, said di- or triglycerides comprising each, independently,
- at least one acyl radical of a C18 or higher fatty acid, preferably selected from oleic acid, linoleic acid and arachidonic acid, and
- at least one acyl radical of a fatty acid selected from DHA and EPA,
**characterised in that** the molar percentage (mol%) of the C18 or higher fatty acid, preferably oleic acid, linoleic acid or arachidonic acid, is equal or higher than the mol% of the EPA or DHA in said marine oil composition.

These marine oil or fat compositions present improved organoleptic properties such as an agreeable taste and the absence or minimization of fish smell; have no or minimal regurgitation problems. Importantly, such compositions allow an increased loading of the effective amount of EPA and DHA, and an extended shelf-life of the compositions carrying them.

The present invention allows the preparation of oils and fats with an extended shelf-life. Marine oils and fats known to become easily rancid, may have an extended shelf life by the addition of C18 or higher fatty acid, preferably oleic, linoleic or arachidonic acid, esterified to any one of the oxygen atoms of the glycerol in the di- or triglycerides of said marine oils and fats.

To determine the amount of a given fatty acid in a mixture of glycerides or methyl or ethyl esters, the glyceride or methyl or ethyl ester is hydrolyzed and the free resulting fatty acids are then analyzed. A preferred way to indicate the relative amount of a fatty acid in respect of a whole quantity of fatty acids, fat, or oil composition, is by a molar percentage or mol%, which is an independent expression of the fatty acid weight, i.e. it does not depend on whether the fatty acid is of short, medium, or large chain. Said molarity may be determined for example by gas chromatography. The areas under the peaks, obtained for each fatty acid resulting from the hydrolysis, are normalized by dividing the obtained area by the molecular weight of the fatty acid.

Methods for determining the percentage in weight or molar percentage of a fatty acid, such as DHA or EPA, in a mixture of ethyl ester of omega-3 fatty acids, or in a mixture of triglycerides of omega-3 fatty acids, are described in Real Farmacopea Española, 2nd ed., pp 2035-2043.

In one embodiment, the present invention relates to the marine oil or fat composition described above wherein said marine oil or fat is selected from fish and algal oil or fat.

Examples of fish oil or fat are, without being limited to, oil or fat extracted from tuna, bonito, sardine, mackerel, horse mackerel, Pacific saury, cod, cuttlefish, menhaden, and salmon.

Examples of algal oil or fat are, without being limited to, oil or fat extracted from krill, chlorella, spirulina, *Crypthecodinium cohnii, Schizochytrium sp and Porphyridium cruentum and Mortierella Alpina.*

In one embodiment, in the marine oil or fat composition of the present invention, the DHA or EPA is located in position *sn*-2 of the di- or triglyceride.

The oils or fats that may be employed in the present invention may be of any purity, grade, acidity. For example, in the case of olive oil, such oil may be commercially graded as virgin, refined, pomace olive oil; or it may be graded according to IOOC (International Olive Oil Council) standards as extra-virgin, virgin, pure, olive oil as such, olive-pomace oil, lampante oil, refined olive oil; or it may be graded according to the U.S. Department of Agriculture (USDA) standards, based on acidity, absence of defects, odor and flavor, as U.S. Grade A or U.S. Fancy, U.S. Grade B or U.S. Choice, U.S. Grade C or U.S. Standard, and U.S. Grade D or U.S. Substandard.

A glyceride is defined as a glycerol ester (1,2,3-propanetriol) with acyl radicals of fatty acids, and it is also known as acyglycerol. If only one hydroxyl of the glycerol molecule esterifies with a fatty acid, a monoglyceride or monoacylglycerol is obtained; if two hydroxyls esterify, a diglyceride or diacylglycerol is obtained; and if all of the three hydroxyl positions are esterified with fatty acids, a triglyceride or triacylglycerol is obtained. The fatty acids in one glyceride molecule may be the same or different. The glyceride term is generic to monoglycerides, diglycerides, triglycerides, and derivatives thereof.

The term "structured lipid" or "structured glyceride" refers to a oil or fat that comprises acyl residues bound to a specific position of the glycerol backbone. Structured lipids or glycerides are usually synthetic because they involve a directed esterification of a specific fatty acid to a specific position of the glycerol backbone, i.e. to the *sn*-2 position, or to the *sn*-1 and *sn*-3 positions that are equivalent. Different are those lipids or glycerides, which may have the same global composition of fatty acids as the structured lipids or glycerides, located at the same positions of the glycerol backbone, but are the result of a non-directed esterification, or random processes in general. The oils or fats of the present invention, of vegetable or marine origin, may comprise structured or non-structured glycerides, or both types.

The carbon atoms of the glyceride scaffold are designated as *sn*-1, *sn-2, sn*-3, being position *sn*-2 in the middle of the glyceride molecule, i.e. in the carbon atom 2 of the glycerol molecule, and being positions *sn*-1 and *sn*-3 stearically equivalent for esterification processes. In one embodiment, in the vegetable or marine oil or fat composition of the present invention, the DHA or EPA is located in position *sn*-2 of the di- or triglyceride.

An acyl group (IUPAC name: alkanoyl) is a functional group derived from the removal of one or more hydroxyl groups from an oxoacid. In the present invention, the acyl group is derived from a fatty acid selected from a C18 or higher fatty acid, in particular oleic acid, linoleic acid and arachidonic acid; docosahexaenoic acid; and eicosapentaenoic acid, which are all carboxylic acids. It has therefore the formula -C(=O)-R, as depicted hereunder, 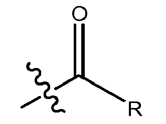 wherein
R represents a radical deriving from the corresponding C18 or higher fatty acid as defined herein; in particular, (Z)-octadec-9-enyl, which derives from oleic acid; (6Z,9Z)-octadeca-6,9-dienyl, which derives from linoleic acid; (6Z,9Z,12Z,15Z)-eicosadeca-6,9,12,15-tetraenyl, which derives from arachidonic acid; (3Z,6Z,9Z,12Z,15Z,18Z)-docosa-3,6,9,12,15,18-hexaenyl, which derives from docosahexaenoic acid; or (3Z,6Z,9Z,12Z,15Z)-eicosa-3,6,9,12,15-pentaenyl, which derives from eicosapentaenoic acid; and the wavy line indicates the bond of attachment to the oxygen atom of the glycerol molecule.

The term "acyl radical of oleic acid" is therefore synonymous to oleoyl.

The term "acyl radical of linoleic acid" is therefore synonymous to linoleoyl.

The term "acyl radical of arachidonic acid" is therefore synonymous to arachidonoyl.

The term "acyl radical of docosahexaenoic acid" is therefore synonymous to docosahexaenoyl.

The term "acyl radical of eicosapentaenoic acid" is therefore synonymous to eicosapentaenoyl.

The di- or triglycerides of the vegetable or marine fat or oil compositions of the present invention may be any one represented by the formula (I): 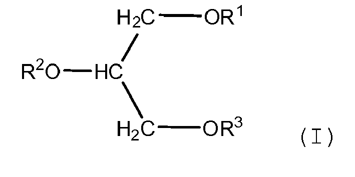 wherein
R¹, R², and R³, are each independently, hydrogen; or an acyl radical of C18 or higher fatty acid, preferably oleic, linoleic, arachidonic, DHA or EPA; provided that
- at least one of R¹, R², and R³ is an acyl radical of a C18 or higher fatty acid, preferably selected from oleic acid, linoleic acid and arachidonic acid, and
- at least one of R¹, R², and R³ is an acyl radical of a fatty acid selected from DHA and EPA.

Examples of di- or triglycerides comprised in the vegetable or marine oil or fat compositions of the present invention, include the following glycerol derivates: ODO (CAS nr. 769924-65-4), OD- (CAS nr. 127988-95-8, 91020-14-3), DOO (CAS nr. 116198-39-1), DO- (CAS nr. 127824-51-5), D-O, DDO (CAS nr. 116229-54-0), DOD, OEO, OE-, EOO, EO-, E-O, EEO, EOE, LD-, DLL, DL-, D-L, DDL, DLD, LEL, LE-, ELL, EL-, E-L, EEL, ELE,
wherein "O" corresponds to an oleic acid acyl radical, "L" corresponds to a linoleic acid acyl radical, "D" corresponds to a DHA acyl radical, "E" corresponds to an EPA acyl radical, "-" refers to a free alcohol residue of the glycerol backbone molecule.

CAS is the acronym for Chemical Abstracts Service, which institution assigns a unique number to chemical compounds.

Preferably, the diglyceride comprised in the vegetable oil or fat compositions of the present invention is -DO or - EO. Preferably the triglyceride comprised in the vegetable oil or fat compositions of the present invention is ODO or OEO.

Preferably, the diglyceride comprised in the marine oil or fat compositions of the present invention is -DO, -DL, - EO, -EL. Preferably the triglyceride comprised in the marine oil or fat compositions of the present invention is ODO, OEO, LDL or LEL.

The present invention further relates to food compositions comprising the vegetable oil or fat composition or the marine oil or fat composition according to any one of the embodiments described herein, and an edible element.

The present invention further relates to foodstuff compositions comprising the vegetable oil or fat composition or the marine oil or fat composition according to any one of the embodiments described herein, and an edible element.

The European Directive 398/1989 defines "(a) Foodstuffs for particular nutritional uses are foodstuffs which, owing to their special composition or manufacturing process, are clearly distinguishable from foodstuffs for normal consumption, which are suitable for their claimed nutritional purposes and which are marketed in such a way as to indicate such suitability."
(b) A particular nutritional use must fulfill the particular nutritional requirements:
   (i) of certain categories of persons whose digestive processes or metabolism are disturbed; or
   (ii) of certain categories of persons who are in a special physiological condition and who are therefore able to obtain special benefit from controlled consumption of certain substances in foodstuffs; or
   (iii) of infants or young children in good health."

These food and foodstuff compositions may be used as additives to milk or powder milk formulations for babies, premature babies, children, or adults, as well as for veterinary feeding. Particularly, these food and foodstuff may be used in infant nutrition in general.

These food and foodstuff compositions may be used as additives to formulations or preparations for sports nutrition, to increase sport performance. Particularly, these food and foodstuff may be used in sports nutrition in general.

These food and foodstuff compositions may be used as additives to formulations or preparations for anti-aging, Alzheimer's disease or infertility treatments.

These marine or vegetable oils or fats may be used in the food industry for the purpose of enriching food products, e.g. dairy products such as yoghurts, milk, eggs, with DHA or EPA, or these marine or vegetal oils or fats may be used as such, like vegetable oils for dressing, cooking, etc. Alternatively, such marine or vegetable oils may be formulated and administered as capsules, tablets, or any other suitable pharmaceutical delivery dosage form. Alternatively, they may be combined with other diet supplements, such as vitamins, minerals, folic acid, and the like.

The vegetable or marine oil or fat compositions of the present invention or the food or foodstuff compositions comprising these vegetable or marine oil or fat compositions may be used as antioxidants (for example applied to ocular treatments or macular degeneration), anti-aging agents, for infertility treatments, for Alzheimer's disease treatment, in infant nutrition, in sports nutrition, for enhancing sports performance. These compositions may be also used as a medicament.

In one embodiment, the present invention relates to the use of the vegetable oil or fat or the marine oil or fat compositions for the manufacture of a medicament for the prevention or treatment of lipodystrophy, anti-aging, Alzheimer's disease, a male and/or female infertility, a tumoral disease, an inflammatory disease, a degenerative disease, or a disease or pathological condition associated with cellular oxidative damage.

In one embodiment, the present invention relates to the use of the vegetable oil or fat or the marine oil or fat compositions for use in the prevention or treatment of lipodystrophy, anti-aging, Alzheimer's disease, a male and/or female infertility, a tumoral disease, an inflammatory disease, a degenerative disease, or a disease or pathological condition associated with cellular oxidative damage.

The present invention also relates to a method of preventing or treating lipodystrophy, anti-aging, Alzheimer's disease, a male and/or female infertility,a tumoral disease, an inflammatory disease, a degenerative disease, Attention-deficit/hyperactivity disorder (ADHD or AD/HD), or a disease or pathological condition associated with cellular oxidative damage in a warm-blooded animal, said method comprising the administration of an effective amount of the vegetable oil or fat composition, or the marine oil or fat composition of the present invention.

Clinical uses of the vegetable oil or fat or the marine oil or fat compositions of the present invention include as an anticancer aid in *in vitro* cancer chemotherapy for drug resistant tumor cells, in combination with cholesterol lowering drugs like simvastatin to increase their effectiveness, for treating lipodystrophy, particularly in AIDS patients under highly active anti-retroviral therapy (HAART), for treating a male and/or female infertility, for treating anti-aging, for treating Alzheimer's or for treating tumoral diseases. Also, the compositions of the present invention may be used to treat neurobehavioral developmental disorders such as Attention-deficit/hyperactivity disorder (ADHD or AD/HD) in children and in adults.

Examples of an inflammatory disease include cystic fibrosis, lupus, and arthritis among others.

Diseases or pathological conditions associated with cellular oxidative damage include without being limited to, a neurodegenerative pathology such as multiple sclerosis, Alzheimer's disease, Parkinson's disease, amiotrophic lateral sclerosis, and muscular dystrophy, among others; a male and/or female infertility; an ocular pathology such as pigmentary retinosis, macular degeneration, and cataracts, among others; an ischaemic pathology such as a myocardial infarct, cerebral infarct; an inflammatory process such as arthritis, vasculitis, glomerulonephritis, and eritomatose lupus, among others; reduction of cardiovascular events such as atherosclerosis; ageing, premature senescence.

Other conditions that can be improved by the use of the vegetable oil or fat or the marine oil or fat compositions of the present invention include proper neuronal function development, a male and/or female infertility, enhancing sports performance in individuals subject to physical exercise, maintaining blood glucose levels in individuals during physical exercise. In particular, the vegetable oil or fat or the marine oil or fat compositions of the present invention may be useful for neonatal development, particularly with respect to the developing brain and retina.

The present invention also relates to a pharmaceutical composition comprising an effective amount of the vegetable oil or fat or the marine oil or fat composition according to any one of the embodiments presented herein, and a pharmaceutically acceptable carrier.

The present invention also relates to a cosmetic composition comprising an effective amount of the vegetable oil or fat or the marine oil or fat composition according to any one of the embodiments presented herein, and a topically acceptable carrier.

As such, the compositions of the present invention or any subgroup thereof may be formulated into various pharmaceutical forms for administration purposes. As appropriate compositions there may be cited all compositions usually employed for systemically administering drugs. To prepare the pharmaceutical compositions of this invention, an effective amount of the particular composition, as the active ingredient, is combined in intimate admixture with a pharmaceutically acceptable carrier, which carrier may take a wide variety of forms depending on the form of preparation desired for administration. These pharmaceutical compositions are desirable in unitary dosage form suitable, particularly, for administration orally, rectally, percutaneously, or by parenteral injection. For example, in preparing the compositions in oral dosage form, any of the usual pharmaceutical media may be employed such as, for example, water, glycols, oils, alcohols and the like in the case of oral liquid preparations such as suspensions, syrups, elixirs, emulsions and solutions; or solid carriers such as starches, sugars, kaolin, lubricants, binders, disintegrating agents and the like in the case of powders, pills, capsules, and tablets. Because of their ease in administration, tablets and capsules represent the most advantageous oral dosage unit forms, in which case solid pharmaceutical carriers are obviously employed. For parenteral compositions, the carrier will usually comprise sterile water, at least in large part, though other ingredients, for example, to aid solubility, may be included. Injectable solutions, for example, may be prepared in which the carrier comprises saline solution, glucose solution or a mixture of saline and glucose solution. Injectable suspensions may also be prepared in which case appropriate liquid carriers, suspending agents and the like may be employed. Also included are solid form preparations, which are intended to be converted, shortly before use, to liquid form preparations. In the compositions suitable for percutaneous administration, the carrier optionally comprises a penetration enhancing agent and/or a suitable wetting agent, optionally combined with suitable additives of any nature in minor proportions, which additives do not introduce a significant deleterious effect on the skin.

The vegetable oil or fat or the marine oil or fat compositions may as well be used to prepare soaps, candles, and the like.

The vegetable or marine oils or fats compositions of the present invention may be prepared by readily available methods in the art, comprising, and without being limited to, chemical methods such as transesterification and esterification reactions, fractionation, hydrogenation; enzymatic methods such as hydrolysis, esterification reaction, and ester transfer (transesterification, acidolysis, alcoholysis); biological methods in which organisms or plants are designed to synthesize the di- or triglycerides of the present invention.

Vegetable or marine oils or fats, their blends, of natural or synthetic origin may be used as starting material for the further processing of their original glycerides to produce the di- or triglyceride molecules of the present invention, i.e. comprising at least one acyl radical of a C18 or higher fatty acid, preferably selected from oleic acid, linoleic acid and arachidonic acid, and at least one one acyl radical of a fatty acid selected from docosahexaenoic (DHA) and eicosapentaenoic acid (EPA) in the case of vegetable oils or fats; or at least one acyl radical of a C18 or higher fatty acid, preferably selected from oleic acid, linoleic acid and arachidonic acid, and at least one acyl radical of a fatty acid selected from DHA and EPA, wherein the molar percentage (mol%) of the C18 or higher fatty acid, preferably oleic acid, linoleic acid or arachidonic acid, is equal or higher than the mol% of the EPA or DHA in case of marine oils or fats.

The vegetable oil or fat compositions may be prepared by acidolysis between the existing di- and triglycerides of the vegetable oil or fat, and free DHA or EPA. This acidolysis takes place in two steps, both catalyzed by lipases and in the presence of a suitable reaction medium. In the first step, there is a hydrolysis of the di- and triglycerides thereby producing mono- and diglycerides respectively, and free fatty acids. In the second step, there is an esterification of the mono- and diglyceride with the introduced free DHA or EPA, to yield di- and triglycerides with one DHA or EPA acyl radical introduced. In an inverse mode, marine oils or fats compositons according to the present invention may be prepared by acidolysis between the existing di- and triglycerides of the marine oil or fat, and free C18 or higher fatty acids, preferably oleic acid, linoleic acid or arachidonic acid, or any mixture of them. This acidolysis takes place in two steps, both catalyzed by lipases and in the presence of a suitable reaction medium. In the first step, there is a hydrolysis of the di- and triglycerides thereby producing mono- and diglycerides respectively, and free fatty acids. In the second step, there is a esterification of the mono- and diglyceride with the introduced free C18 or higher fatty acid, preferably oleic acid, linoleic acid or arachidonic acid, to yield di- and triglycerides with one acyl radical from a C18 or higher fatty acid, preferably oleic acid, linoleic acid or arachidonic acid introduced.

Alternatively, either vegetable or marine oil and fat compositions may be prepared by acidolysis between the existing di- and triglycerides of the vegetable or marine oil or fat, and free C18 or higher fatty acid, preferably oleic acid, linoleic acid or arachidonic acid, DHA, or EPA, depending on which fatty acids are already available from the starting material, i.e. already present in the di- or triglycerides of the starting vegetable or marine oil or fat material. If none of the desired fatty acids is present at the starting material, they will be incorporated into the end di- or triglycerides.

Depending on the lipase used, the free fatty will be esterified at oxygen atom bound to carbon atoms 1 and 3 (*sn*-1 and *sn*-3 positions), or esterified at the oxygen atom bound to the carbon atom 2 of the glycerol molecule (*sn*-2 position). Examples of a 1,3-specific lipase are Lipozyme IM (Novo Nordisk A/S, Denmark), lipase from Rhizopus delemar (lipase Rd, from Tanabe Seiyaku Co. Ltd., Osaka, Japan), lipase from Rhizopus oryzae (lipase D), and lipase from Pseudomonas fluorescens, (lipase AK) (both from Amano Pharmaceutical Co., Nagoya, Japan). Alternatively, a 1,3-specific lipase may be used in two acidolysis reactions departing from a triglyceride to introduce a specific free fatty acid into *sn*-2 position as illustrated by Hita et al. (Process Biochemistry (2007) 42:415-422).

Lipases may be conveniently immobilized onto a support such as Celite 545 AW or Accurel MP1000.

If one DHA or EPA is to be introduced into a glyceride, only one acidolysis reaction is performed. If two DHA or EPA are to be introduced into a glyceride, then two acidolysis reactions are performed. Similarly, if one C18 or higher fatty acids, preferable oleic acid, linoleic acid or arachidonic acid, is to be introduced into a glyceride, only one acidolysis reaction is perfomed. If two C18 or higher fatty acids, preferably oleic acid, linoleic acid or arachidonic acid, are to be introduced into a glyceride, then two acidolysis reactions are performed.

Suitable reaction mediums include hydrocarbon solvents such as n-hexane.

As such, the present invention also relates to a process for preparing the vegetable oil or fat composition as described herein, wherein said process comprises one or more acidolysis of the glycerides of the vegetable oil or fat with free DHA or EPA. Similarly, the present invention relates to a process for preparing the marine oil or fat composition as described herein, wherein said process comprises one or more acidolysis of the glycerides of the marine oil or fat with free C18 or higher fatty acids, preferably oleic acid, linoleic acid or arachidonic acid.

The obtained fat or oil vegetable composition may be stored as such or further processed. In addition, the obtained composition may be purified to separate the di- or triglycerides from the free fatty acids, or from other substances.

### Examples

### EXAMPLE 1: Production of an olive oil comprising triacylglycerols with at least one oleoyl and one docosahexaenoyl in the same triacylglycerol molecule

The reaction mixture consisted of olive oil, 100 mg; DHA, 220 mg; hexane, 5 mL and immobilized lipase (Novozym 435), 125 mg. These amounts determined a DHA/olive oil molar ratio of m₀ = 6. This reaction mixture was placed in 50-mL Erlenmeyer flasks with silicone-capped stoppers. The mixture was heated and agitated in an orbital shaking air-bath at 400 rpm for 24 h (Inkubator 1000, Unimax 1010 Heidolph, Klein, Germany). The reaction was stopped by separation of lipase by filtration and the reaction product was stored at -24 °C until analysis. All reactions, and their corresponding analyses, were carried out in triplicate. Standard deviations were always lower than 8%.

Acylglycerols (monoacylglycerol, diacylglycerol and triacylglycerol) were identified by thin-layer chromatography (TLC) and the fatty acid composition of each acylglycerol type was carried out by gas chromatography (GC). The identification of acylglycerols by TLC was carried out on plates of silica-gel (Preocated TLC plates, SIL G-25; Macherey-Nagel, Sigma-Aldrich) activated by heating at 105 °C for 30 min. The samples were spotted directly on the plate by adding 0.2 mL of reaction product mixture. The plate was then developed in chloroform/acetone/methanol (95:4.5:0.5, v/v/v). Spots of each lipid were visualized by spraying the plate with iodine vapor in a nitrogen stream. Fractions corresponding to each lipid type were scraped from the plates and methylated according to the method of Lepage and Roy. Then methyl esters were analyzed by GC. At these conditions 10% DHA was incorporated to the TG of olive oil.

### EXAMPLE 2: Production process to introduce Oleic in fish oil.

### Acidolysis in the packed bed reactor

The immobilized lipase (5.5 g of lipases DF immobilized on Accurel MP1000) was packed into a glass column (1.5 cm i.d. 25 cm length) covered with aluminum foil to prevent photo-induced oxidation. The enzyme bed was held between two mobile perforated disks, which permit the bed volume to be adjusted to the volume of the packed lipase. The substrate mixture and the column was jacketed to maintain the reaction temperature at 30 8C. The content of this reservoir bottle was continuously agitated at 130 rpm by a magnetic bar. The system was operated with recirculation and the reaction was monitored by sampling at different times (between 1 and 70 h) in the substrate reservoir. The reaction mixture contained 20 g of cod liver oil (CLO), 39,2 g oleic acid (OA) (OA/CLO molar ratio, m0 = 6) and 200 mL of n-hexane. This mixture was pumped up through the column by a peristaltic pump at a flow rate of 200 mL/h.

### Purification of structured triacylglycerols (STAG)

In order to separate the products of the acidolysis reaction (STAG and free fatty acids) the following procedure was developed: 30 g of the final reaction mixture (36% STAG, 64% free fatty acids) were dissolved in n-hexane up to a total volume of 375 mL; 300 mL of KOH 0.8 N, hydroalcoholic solution (30% ethanol) were then added. This mixture was intensively agitated and the hydroalcoholic phase (containing the free fatty acid as potassium salts) and the hexane phase (containing the purified TAG) were decanted. The hydroalcoholic phase was extracted once more with 100 mL of n-hexane to increase the triacylglycerols (TAG) recovery yield. Both hexane solutions were then put together, the hexane was evaporated and the extracted STAG weighed. Following this procedure 50-60% of STAG can be extracted with a purity of over 90%. The chemicals used in this extraction were of PRS quality (Panreac S.A., Barcelona, Spain).

### Determination of the positional distribution of fatty acids in STAG by the pancreatic lipase method

In order to determine the percentage of each fatty acid in position 2 of the STAG the following procedure was employed (European Community, 1991): 0.1 g of purified STAG, 2 mL of buffer solution trizma-HCl 1 M (pH 8) and 20 mg of pancreatic lipase were placed in a centrifuge tube; this mixture was shaken gently and 0.5 mL of sodium cholate solution (1 g/L) or 0.2 mL of bile salts and 0.2 mL of calcium chloride solution (220 g/L) were then added; this mixture was shaken gently for 1 min at 40 8C and then intensively for 2 min; the tube was cooled at room temperature; 1 mL of HCl (6 N), 1 mL of diethyl ether (free of peroxides) were then added and this mixture was again shaken intensively for a short period of time; next the mixture was centrifuged at 3000 rpm for 10 min and the organic layer was extracted with a Pasteur pipette; the sample obtained was analyzed by TLC and GC. Thus, TAGE obtained contains 45% of the total EPA and DHA in the oil in the central position and oleic acid occupies 26% of the extreme positions.

### Example 3: Blind tasting and smelling of modified Omega-3 oils

### 2.1 Overview

A blind tasting (and smelling) was performed to test how an exchange of fatty acids in the triglyceride structure of vegetal oil can affect the smell and the taste of the product.

All the new developed oils used in this blind test were obtained through enzymatic esterification and transesterification processes.

### 2.2 Preparations

The tasting consisted in 10 people sitting around a table with several samples of different oils. The samples (20 cc of each oil) were placed in identical bottles properly labelled with numbers from 1 to 12 *(see* *Fig. 1**)*. Tasters did not have any special knowledge about oil smell and taste.

### 2.3 Samples

The following list shows the oils used and the number assigned to each one for the blind test. This correspondence between the numbers and the samples is only known by the person running the tasting. None of the tasters was able to identify the samples.
No. 1 - Regular olive oil
No. 2 - Algatrium® DHA 70% TG (72,0% DHA)
No. 3 - Algatrium® enriched with Oleic acid and structured (40% DHA of the fatty acids in central position, and 30% of the fatty acids in positions 1 or 3 of the trigliceryde structure) (38,8% DHA)
No. 4 - Algatrium® enriched with Caprylic acid aleatory (55, 5% DHA)
No. 5 - Algatrium® enriched in Linoleic acid aleatory (38, 0% DHA)
No. 6 - Algatrium® enriched in Caprylic acid structured (63, 6% DHA)
No. 7 - Algatrium® enriched in Linoleic structured (38,6% DHA)
No. 8 - Algatrium® enriched in Oleic acid aleatory (38,6% DHA)
No. 9 - Algatrium® enriched in Oleic acid aleatory and filtered to improve taste. (38,6% DHA)
No. 10 - Algatrium® enriched in Palmitic acid and structured. (41, 6% DHA)
No. 11 - Algatrium® enriched in Palmitic acid aleatory (40, 7% DHA)
No. 12 - Olive oil enriched with DHA (37,5% DHA)

### 2.4. Development of the tests

Tasters were requested to first smell the samples, write down the smell sensations and then proceed with the tasting.

For the evaluation of the oils, tasters were provided with a scorecard (with a list of bottle numbers down one side) with a limited number of possible answers in an attempt to harmonize the results (g: good taste; b: bad taste; u: unknown taste; n: normal taste; s: slight taste; f: faint taste).

Olive taste/smell (O) and Fish taste/smell (F) were evaluated following the above mentioned answers. The tasters were given the option to add any remark to the standard answers.

### 2.5 End of the tests and results

The following two tables gather the scores of the 10 tasters for the 12 samples (smelling and tasting)

**Table 2. Evaluation results for the blind smelling test.**

| **BLIND SMELLING TEST** | | | | | | | | | | | | | | | | | | | | | | | | |
|---|---|---|---|---|---|---|---|---|---|---|---|---|---|---|---|---|---|---|---|---|---|---|---|---|
| | Sample | | Sample | | Sample | | Sample | | Sample | | Sample | | Sample | | Sample | | Sample | | Sample | | Sample | | Sample | |
| | 1 | | 2 | | 3 | | 4 | | 5 | | 6 | | 7 | | 8 | | 9 | | 10 | | 11 | | 12 | |
| Taster | O | F | O | F | O | F | O | F | O | F | O | F | O | F | O | F | O | F | O | F | O | F | O | F |
| 1 | n | | | s | n | | u | | f | | b* | | u | | s | | u | | u | | | s | n | |
| 2 | n | | | s | n | | bu | | s | | bu | | u | | s | | u | | f | | | s | n | |
| 3 | n | | | s | n | | bu | | f | | b* | | u | | s | | gu | | f | | | s | n | |
| 4 | n | | | s | n | | bu | | f | | b* | | u | | f | | u | | s | | | s | n | |
| 5 | n | | | s | n | | u | | f | | b* | | bu | | s | | u | | f | | | s | n | |
| 6 | n | | | s | n | | u | | u | | b* | | u | | s | | gu | | f | | | s | n | |
| 7 | n | | | s | n | | u | | f | | b* | | bu | | s | | gu | | s | | | s | n | |
| 8 | n | | | s | n | | bu | | f | | bu | | u | | f | | u | | s | | | s | n | |
| 9 | n | | | s | n | | u | | f | | b* | | u | | s | | gu | | f | | | s | n | |
| 10 | n | | | s | n | | u | | f | | b* | | u | | s | | u | | f | | | s | n | |

**Table 3. Evaluation results for the blind tasting test.**

| **BLIND TASTING TEST** | | | | | | | | | | | | | | | | | | | | | | | | |
|---|---|---|---|---|---|---|---|---|---|---|---|---|---|---|---|---|---|---|---|---|---|---|---|---|
| | Sample | | Sample | | Sample | | Sample | | Sample | | Sample | | Sample | | Sample | | Sample | | Sample | | Sample | | Sample | |
| | 1 | | 2 | | 3 | | 4 | | 5 | | 6 | | 7 | | 8 | | 9 | | 10 | | 11 | | 12 | |
| Taster | O | FF | O | F | O | F | O | F | O | F | O | F | O | F | O | F | O | F | O | F | O | F | O | F |
| 1 | gn | | | s | gn | | b* | | f | | b* | | u | | s | | gu | | | s | | s | gn | |
| 2 | gn | | | s | gn | | b* | | f | | b* | | u | | s | | u | | | s | | s | gn | |
| 3 | gn | | | s | gn | | b* | | f | | b* | | u | | s | | gu | | | s | | s | gn | |
| 4 | gn | | | s | gn | | b* | | f | | b* | | u | | | f | | f | | s | | s | gn | |
| 5 | gn | | | s | gn | | b* | | f | | b* | | b* | | s | | gu | | | s | | s | gn | |
| 6 | gn | | | s | | f | b* | | f | | b* | | u | | s | | u | | | f | | s | gn | |
| 7 | gn | | | s | gn | | b* | | f | | b* | | bu | | s | | gu | | | s | | s | gn | |
| 8 | gn | | | s | gn | | b* | | f | | b* | | * | | f | | | f | | s | | s | gn | |
| 9 | gn | | | s | | f | b* | | f | | b* | | * | | s | | gu | | | s | | s | gn | |
| 10 | gn | | | s | | | b* | | f | | b* | | u | | s | | u | | | s | | s | gn | |

| | | | | | | | | | | | | | | | | | | | | | | | | |
|---|---|---|---|---|---|---|---|---|---|---|---|---|---|---|---|---|---|---|---|---|---|---|---|---|
| *additional comments included | | | | | | | | | | | | | | | | | | | | | | | | |

### 2.6 Comments and conclusions

The results of the test can be summarized per each sample of oil as follows (comments and remarks are also included):
Oil No. 1: A clear olive oil smell and taste.
Oil No. 2: A slightly fishy smell and taste.
Oil No. 3: Olive oil smell. Nobody detects fishy smell. Very good olive oil taste. A faintly fishy taste was only detected by two tasters.
Oil No. 4: Unknown and strange smell. Solvent-like taste. Nobody detects fishy smell or taste.
Oil No. 5: Faint olive oil smell and taste. Nobody detects fishy taste.
Oil No. 6: Solvent-like smell and taste, but not as strong as sample 4.
Oil No. 7: Unknown smell and taste. Three tasters considered it had a faintly solvent-like taste.
Oil No. 8: Slightly olive oil smell. Faint taste (as if it was a very well refined olive oil). One taster described a faintly fishy taste.
Oil No. 9: Unknown but good smell and taste. Two tasters detected a faintly fishy taste.
Oil No. 10: Faint smell, not fishy. Faintly fishy taste.
Oil No. 11: Faintly fishy smell and taste.
Oil No. 12: A clear olive oil smell and taste.

## Claims

1. Vegetable oil or fat composition comprising di- or triglycerides, **characterised in that** said di- or triglycerides comprise each, independently,
• at least one acyl radical of a C18 or higher fatty acid, except for DHA and EPA, preferably selected from oleic acid, linoleic acid and arachidonic acid, and
• at least one one acyl radical of a fatty acid selected from docosahexaenoic (DHA) and eicosapentaenoic acid (EPA).

2. The vegetable oil or fat composition according to claim 1, wherein said vegetable oil is selected from olive oil, sunflower seed oil, soybean oil, and any mixture or blend thereof.

3. The vegetable oil or fat composition according to any one of claims 1-2, wherein the DHA or EPA are located in position *sn*-2 of the di- or triglyceride.

4. Marine oil or fat composition comprising di- or triglycerides, said di- or triglycerides comprising each, independently,
• at least one acyl radical of a C18 or higher fatty acid, except for DHA and EPA, preferably selected from oleic acid, linoleic acid and arachidonic acid, and
• at least one acyl radical of a fatty acid selected from DHA and EPA,
**characterised in that** the molar percentage (mol%) of the C18 or higher fatty acid, except for DHA and EPA, preferably oleic acid, linoleic acid or arachidonic acid, is equal or higher than the mol% of the EPA or DHA in said marine oil composition.

5. The marine oil or fat composition according to claim 4, wherein said marine oil or fat is selected from fish and algal oil or fat.

6. The marine oil or fat composition according to claim 5, wherein the fish oil or fat is selected from oil or fat extracted from tuna, bonito, sardine, mackerel, horse mackerel, Pacific saury, cod, cuttlefish, menhaden, and salmon.

7. The marine oil or fat composition according to claim 5, wherein the algal oil or fat is extracted from krill, chlorella, spirulina, *Crypthecodinium cohnii, Schizochytrium sp, Porphyridium cruentum and Mortierella Alpina.*

8. The marine oil or fat composition according to any one of claims 4-7, wherein the DHA or EPA is located in position *sn*-2 of the di- or triglyceride.

9. Food composition comprising the vegetable oil or fat composition according to any one of claims 1-3, or the marine oil or fat composition according to any one of claims 4-8, and an edible element.

10. Foodstuff composition comprising the vegetable oil or fat composition according to any one of claims 1-3, or the marine oil or fat composition according to any one of claims 4-8, and an edible element.

11. Use of the vegetable oil or fat composition according to any one of claims 1-3, or the marine oil or fat composition according to any one of claims 4-8, or the food composition according to claim 9, or the foodstuff composition according to claim 10, as an antioxidant, an anti-aging agent, for Alzheimer's disease treatment, for infertility treatments, in infant nutrition, in sports nutrition, for enhancing sports performance.

12. The vegetable oil or fat composition according to any one of claims 1-3, or the marine oil or fat composition according to any one of claims 4-8, for use as a medicament.

13. Use of the vegetable oil or fat composition according to any one of claims 1-3, or the marine oil or fat composition according to any one of claims 4-8, for the manufacture of a medicament for the prevention or treatment of lipodystrophy, anti-aging, Alzheimer's disease, a male and/or female infertility, a tumoral disease, an inflammatory disease, a degenerative disease, Attention-deficit/hyperactivity disorder (ADHD or AD/HD), or a disease or pathological condition associated with cellular oxidative damage.

14. The vegetable oil or fat composition according to any one of claims 1-3, or the marine oil or fat composition according to any one of claims 4-8, for use in the prevention or treatment of lipodystrophy, anti-aging, Alzheimer's disease, a male and/or female infertility, a tumoral disease, an inflammatory disease, a degenerative disease, Attention-deficit/hyperactivity disorder (ADHD or AD/HD), or a disease or pathological condition associated with cellular oxidative damage.

15. A method of preventing or treating lipodystrophy, anti-aging, Alzheimer's disease, a male and/or female infertility, a tumoral disease, an inflammatory disease, a degenerative disease, Attention-deficit/hyperactivity disorder (ADHD or AD/HD), or a disease or pathological condition associated with cellular oxidative damage in a warm-blooded animal, said method comprising the administration of an effective amount of the vegetable oil or fat composition according to any one of claims 1-3, or the marine oil or fat composition according to any one of claims 4-8.

16. A pharmaceutical composition comprising an effective amount of the vegetable oil or fat composition according to any one of claims 1-3, or the marine oil or fat composition according to any one of claims 4-8, and a pharmaceutically acceptable carrier.

17. A cosmetic composition comprising an effective amount of the vegetable oil or fat composition according to any one of claims 1-3, or the marine oil or fat composition according to any one of claims 4-8, and a topically acceptable carrier.

18. A process for preparing the vegetable oil or fat composition according to any one of claims 1-3, wherein said process comprises one or more acidolysis of the glycerides of the vegetable oil or fat with free DHA or EPA.
